# EUROPEAN PATENT APPLICATION

(11) **EP 4 559 780 A1**
(43) Date of publication of application: **28.05.2025**
(21) Application number: 23857141.8
(22) Date of filing: 03.08.2023
(51) Int. Cl.: B62D 1/04, B60R 21/203

(54) **STRUCTURE FOR ATTACHING AIRBAG MODULE TO STEERING WHEEL**

(30) Priority: 25.08.2022 JP 2022134071
(71) Applicant: Autoliv Development AB, 44783 Vargarda (SE)
(72) Inventor: ISHIDA, Ryotaro, Yokohama-shi, Kanagawa 222-8580 (JP); ABE, Kazuhiro, Yokohama-shi, Kanagawa 222-8580 (JP); HONMA, Keisuke, Yokohama-shi, Kanagawa 222-8580 (JP); KUMAR, Sumit, Yokohama-shi, Kanagawa 222-8580 (JP)
(74) Representative: Schön, Thilo
(86) International application number: PCT/JP2023/028374
(87) International publication number: WO 2024/043027

(57) **Abstract**

An engaging member 26, the base end side 26a being joined to the housing 15 of the airbag module, having an engaging hole 28 at the tip end 26b thereof; an engaging protrusion 27 formed on the core 3 of the steering wheel so as to protrude upward from a vertical lower position of the steering wheel toward the center of the steering wheel, with the neutral position of the steering wheel as a reference, and which is inserted into the engaging hole of the engaging member to mount the airbag module to the steering wheel; and an insulating member 32 provided between the engaging protrusion and the engaging hole for preventing contact between the engaging protrusion and the engaging hole engaged with the engaging protrusion.

## Description

### TECHNICAL FIELD

The present invention relates to a mounting structure for mounting an airbag module to a steering wheel, which is easy to assemble and enables reliable mounting.

### BACKGROUND ART

There are various known configurations for mounting an airbag module provided with a driver's seat airbag on a steering wheel, and one example is disclosed in Patent Document 1.

The "Steering wheel damper mechanism and vehicle steering wheel device" of Patent Document 1 is configured with two damper units that are provided between the steering wheel and an airbag module that serves as a damper mass, and that dampens vibrations of the steering wheel, and an engaging mechanism (plate-shaped damper hook) that is provided in parallel with the damper unit between the steering wheel and the airbag module, and retains the steering wheel and the airbag module while enabling relative displacement therebetween.

### RELATED ART DOCUMENTS

### PATENT DOCUMENTS

[Patent Document 1] Japanese Unexamined Patent Application 2020-026263

### SUMMARY OF THE INVENTION

### PROBLEM TO BE SOLVED BY THE INVENTION

In Patent Document 1, the hook of a plate-shaped damper provided on the airbag module is structured to engage with the steering wheel, and the airbag module can be securely attached to the steering wheel with excellent operability.

There was a demand for further improvements in the way the airbag module is attached to the steering wheel.

In light of the problem described above, an object of the present invention is to provide a mounting structure for mounting an airbag module to a steering wheel with superior operability and that enables reliable attachment.

### MEANS FOR SOLVING THE PROBLEM

A mounting structure for mounting an airbag module to a steering wheel according to the present invention includes:
an engaging member, a base end side being joined to housing of the airbag module, having an engaging hole at the tip end thereof;
an engaging protrusion formed on a core of the steering wheel so as to protrude upward from a vertical lower position of the steering wheel toward the center of the steering wheel, with the neutral position of the steering wheel as a reference, and which is inserted into an engaging hole of the engaging member to mount the airbag module to the steering wheel; and
an insulating member provided between the engaging protrusion and the engaging hole for preventing contact between the engaging protrusion and the engaging hole engaged with the engaging protrusion.

The engaging member is preferably formed of a plate material having the engaging hole formed therethrough and capable of bending elastically deforming, the engaging protrusion is preferably formed with an inclined surface along which a tip end of the engaging member slides along the mounting direction of the airbag module mounting to the steering wheel, the engaging member preferably slides along the inclined surface and undergoes bending elastic deformation, and when the engaging hole reaches an end edge of the inclined surface, the engaging member preferably elastically restores the original shape thereof and the engaging protrusion is inserted into the engaging hole.

The core metal of the steering wheel is preferably formed by a casting mold which is molded at a parting line, and the parting line is set so as to cross the inclined surface.

The housing of the airbag module and the core metal of the steering wheel form a conductive circuit.

The airbag module is preferably a damper mass, and a damper unit for damping vibrations of the steering wheel is provided between the steering wheel and the airbag module in parallel with the engaging member.

### EFFECT OF THE INVENTION

The mounting structure for mounting an airbag module to a steering wheel according to the present invention exhibits superior assembly operability and ensures reliable mounting.

### BRIEF DESCRIPTION OF THE DRAWINGS

FIG. 1 is a perspective view depicting an example of a steering wheel to which the mounting structure of an airbag module is applied to a steering wheel according to the present invention.
FIG. 2 is a view depicting a main part of a core metal of a steering wheel in a preferred embodiment of the mounting structure for mounting an airbag module to a steering wheel according to the present invention, as viewed from the Z-axis direction.
FIG. 3 is an explanatory diagram of an airbag module in a preferred embodiment of the mounting structure for mounting an airbag module to a steering wheel according to the present invention, as viewed from the X-axis direction.
FIG. 4 is an explanatory diagram depicting the back side of the airbag module depicted in FIG. 3.
FIG. 5 is an exploded perspective view of the airbag module depicted in FIG. 3.
FIG. 6 is an enlarged perspective view of an engaging member provided with an insulating member, which is provided in the airbag module depicted in FIG. 3.
FIG. 7 is a schematic explanatory diagram (as viewed from the direction of line A-A in FIG. 2) depicting an initial state of attachment of a preferred embodiment of the mounting structure for mounting an airbag module to a steering wheel according to the present invention.
FIG. 8 is an explanatory diagram illustrating an engagement between an engaging member of the airbag module depicted in FIG. 3 and an engaging protrusion of the core metal.
FIG. 9 is an enlarged cross-sectional view of a main part depicting an engaged state between an engaging protrusion and an engaging hole provided with an insulating member, which are engaged by the engagement action indicated in FIG. 8.
FIG. 10 is a perspective view of a main part depicting a mounting state of the core metal depicted in FIG. 2 and the airbag module depicted in FIG. 3.

### DESCRIPTION OF THE PREFERRED EMBODIMENTS

A preferred embodiment of a mounting structure for mounting an airbag module to a steering wheel according to the present invention will be described in detail below with reference to the accompanying drawings.

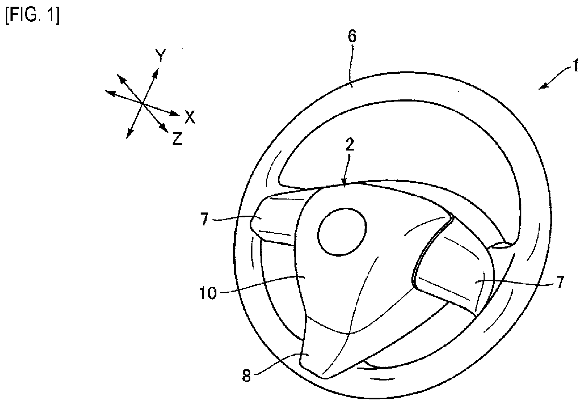

FIG. 1 to FIG. 5 depict a steering wheel 1 for a vehicle and an airbag module 2 attached thereto.

FIG. 1 is a perspective view depicting an outline of a steering wheel 1 to which an airbag module 2 is attached.

In the following drawings, including in FIG. 1, each direction is illustrated assuming that the steering position of the steering wheel 1 mounted on the vehicle is in a neutral position.

The neutral steering position refers to a position where the steering angle of the steering wheel 1 is "zero" and the steering front wheels face in a straight line.

In the figure, the direction of the Z axis of the three-dimensional coordinate system is along a steering shaft (not shown), with the direction toward the front wheels being downward and the direction toward the steering wheel 1 being upward.

Similarly, the direction of the X-axis of the three-dimensional coordinate system is from the 3 o'clock direction (right) to the 9 o'clock direction (left) of an analog clock on a plane perpendicular to the Z-axis, and the direction of the Y-axis is from the 12 o'clock direction (up) to the 6 o'clock direction (down) on the same plane. Otherwise, the side seen from the side of the driver shall be described as the front side and the opposite side as the back side.

The steering wheel 1 is installed on the driver's seat of the vehicle, is connected to the steering shaft, and transmits the operating force of the driver to the steering gear and the like.

An airbag module 2 that functions as a driver's seat airbag in the event of an emergency is provided in the center of the steering wheel 1.

The airbag module 2 also functions as a horn switch under normal operation that a driver pushes to cause the horn to sound.

The airbag module 2 further functions as a module damper for damping vibrations of the steering wheel 1.

The base portion of the steering wheel 1 is made of a core metal 3 produced by casting.

The core metal 3 is roughly configured to include a boss area 5 having a central boss hole 4, a rim 6 that is gripped by the driver, and spokes 7, 8 that connect the boss area 5 and the rim 6. A steering shaft is connected to the boss hole 4.

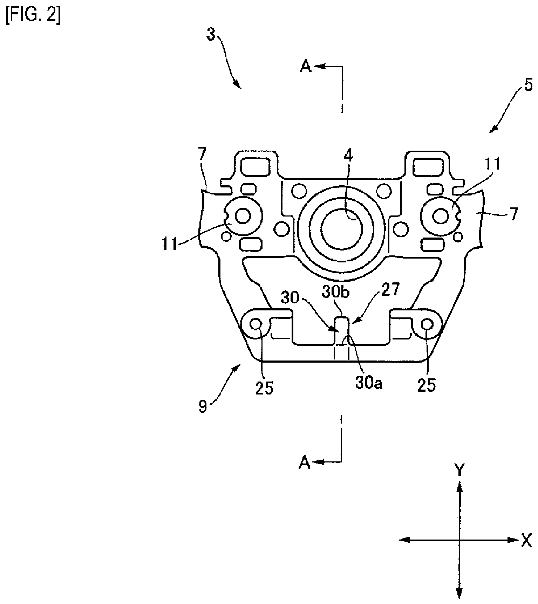

As depicted in FIG. 2, in the boss area 5, when the steering wheel 1 is in the neutral position, a bridge part 9 is provided that connects the base parts of the left and right spokes 7 and is spaced a distance from the boss hole 4 on the 6 o'clock side, which is downward in the vertical direction (Y-axis direction).

The structure of the airbag module 2 will now be briefly described with reference to FIG. 1 and FIG. 3 to FIG. 5. The airbag module 2 on the driver side is covered with a horn cover 10 made of resin which functions as a design surface.

At the rear of the horn cover 10, a locking plate 12 is provided to which a damper unit 11, which will be described later, is fixed.

An airbag cushion 13 that expands and deploys in an emergency is folded to be accommodated inside the horn cover 10.

An inflator 14 is attached to the locking plate 12 and is stowed in the airbag cushion 13.

When a signal is sent from the vehicle sensors during an emergency, inflator gas is supplied from inflator 14 to the airbag cushion 13.

The airbag cushion 13 to which the inflation gas is supplied ruptures the horn cover 10 and expands and deploys into the vehicle interior space to restrain and protect the driver.

The airbag module 2 is composed of a metal locking plate 12, a metal housing 15 formed in a dish shape with a peripheral wall 15a provided on the surface side and provided in two layers on the surface of the locking plate 12, two hollow cylindrical damper units 11, a pin 16 slidably inserted into the hollow interior of the damper unit 11, an inflator 14, a metal retainer ring 17 having a bolt 17a to which a nut 18 is fastened and which fixes the airbag cushion 13, the inflator 14, and the like to the housing 15, and the horn cover 10 which stows the airbag cushion 13.

Although not depicted, the airbag cushion 13 has an insertion hole formed therein into which the inflator 14 is inserted. A bolt insertion hole for the retainer ring 17 is formed around the insertion hole.

The retainer ring 17 is provided inside the airbag cushion 13. The retainer ring 17 is aligned with the insertion hole of the airbag cushion 13 so that the bolt 17a projects from the bolt insertion hole.

The locking plate 12 has a hole part 12a formed in the center thereof, through which the inflator 14 is inserted. Two lock holes 12c for mounting and securing the two damper units 11 are formed in the recess part 12b on both sides of the hole part 12a.

A hole part 15b is formed inside a peripheral wall 15a of the dish-shaped housing 15, into which the inflator 14 inserted into the hole part 12a of the locking plate 12 is inserted.

The airbag cushion 13 is installed in the housing 15 with the insertion hole aligned with the hole part 15b. The periphery of the insertion hole of the airbag cushion 13 is sandwiched between the retainer ring 17 and the housing 15.

The damper unit 11 is attached to the inside of the recess part 12b from the front side (housing 15 side) of the locking plate 12, and is secured to the locking plate 12 via the lock hole 12c.

The pin 16 has a head part 16a at one end, and is inserted into the damper unit 11 from the housing 15 side and passes through the lock hole 12c of the locking plate 12.

The head part 16a of the pin 16 is sandwiched between the housing 15 and the locking plate 12 and is retained therebetween.

The inflator 14 has an outer peripheral flange 14a that abuts against the rear surface of the locking plate 12.

The inflator 14 is inserted into the insertion hole of the airbag cushion 13 through the hole part 12a of the locking plate 12, the hole part 15b of the housing 15, and the retainer ring 17.

The bolt 17a of the retainer ring 17 protruding from the airbag cushion 13 passes through the housing 15, the locking plate 12, and the outer peripheral flange 14a of the inflator 14, and is fastened to the nut 18 on the back side of the locking plate 12.

As a result, the airbag cushion 18 and the inflator 14 are secured to the housing 15, and the damper unit 11 is assembled onto the locking plate 12.

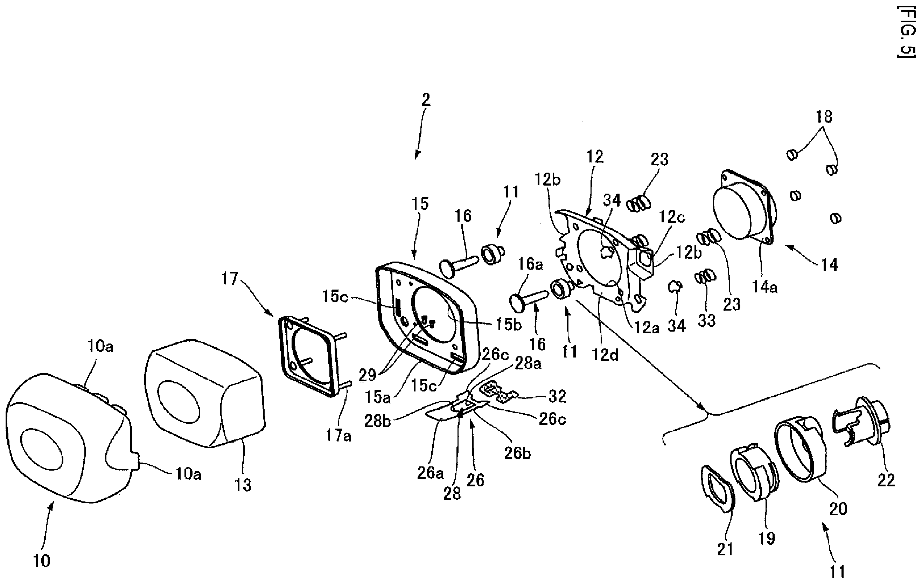

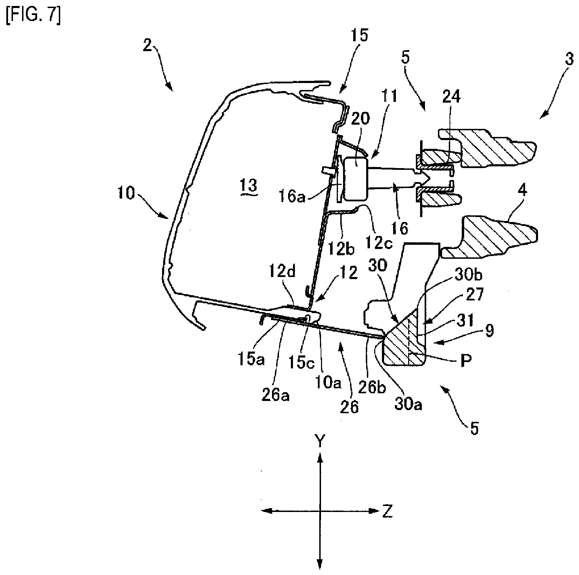

As depicted in FIG. 5 and FIG. 7, the horn cover 10 has an engaging part 10a at an opening edge part that is engaged with an engaged part 15c formed on the peripheral wall 15a of the housing 15.

When the locking plate 12 is attached to the housing 15, the engaging part 10a of the horn cover 10 is further sandwiched and retained between the pressing part 12d of the locking plate 12 and the engaged part 15c of the housing 15 (see FIG. 7).

The damper unit 11 provided in the airbag module 2 is a member for elastically mounting the airbag module 2 to the core metal 3 of the steering wheel 1, and forms the center of the module damper.

Briefly, as depicted in FIG. 5, the damper unit 11 is configured by housing a ring-shaped elastic body 19 for damping vibration inside a holder 20, and engaging an insulator plate 21 superimposed on one end of the elastic body 19 with a sleeve 22 that is inserted into and retained within the elastic body 19. The pin 16 is inserted into a sleeve 22.

The holder 20 is inserted into the lock hole 12c of the locking plate 12 and secured to the locking plate 12 by being rotated relative to the lock hole 12c.

As depicted in FIG. 2, the two damper units 11 are arranged side by side in the X-axis direction with the neutral position of the steering wheel 1 as a reference, and are disposed on both the left and right sides of the airbag module 2.

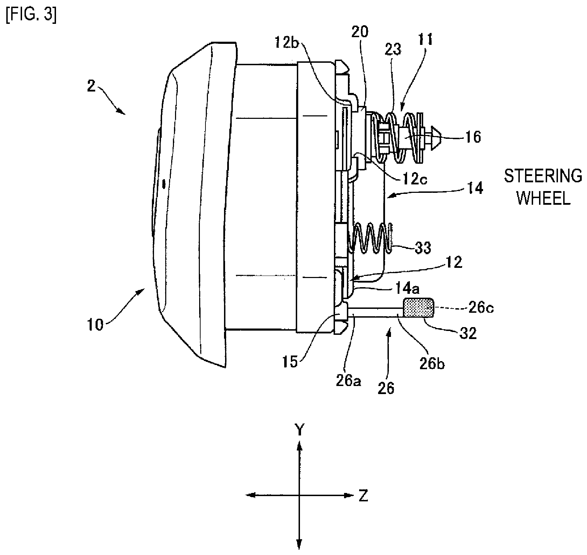

As depicted in FIG. 3, a pin 16 protrudes from the damper unit 11 in the Z-axis direction toward the boss area 5 of the core bar 3.

By attaching this pin 16 to the core metal 3, the airbag module 2 is attached and connected to the steering wheel 1 in the Z-axis direction via the damper unit 11.

As a result, a damper unit 11 for damping vibrations of the steering wheel 1 is disposed between the airbag module 2 and the steering wheel 1.

The pin 16 is inserted through a coil-shaped horn spring 23 and then into a collar member 24 provided on the core bar 3. The pin 16 is attached to and retained by the core bar 3 with a collar member 24 (see FIG. 7).

That is, the horn spring 23 is provided between the core metal 3 and the airbag module 2, and ensures a gap between the core metal 3 and the airbag module 2 for operating the horn.

As a result, the airbag module 2 is elastically supported by the horn spring 23 relative to the steering wheel 1 and is connected to the damper unit 11 so as to be movable toward the steering wheel 1, in other words, is capable of being pressed.

The vibration of the steering wheel 1 is transmitted to the damper unit 11 via the pin 16. The transmitted vibrations act as a damper mass using the airbag module 2 and are damped by the elastic body 19 of the damper unit 11.

In the present embodiment, in order to achieve vibration damping by the damper units 11 provided at two locations on the airbag module 2, the hardness of the elastic body 19 is preferably increased, and the Shore A rubber hardness is preferably set to HS18 to HS80.

Regarding the horn function, when the airbag module 2 is pressed in the Z-axis direction toward the steering wheel 1, the entire airbag module 2 including the damper unit 11 slides against the pin 16 retained by the collar member 24 of the core metal 3, and the horn spring 23 is elastically compressed and deformed.

As a result, the contacts provided on the housing 15 of the airbag module 2 and the core metal 3 are electrically connected, causing the horn to sound.

When pressing of the airbag module 2 is lifted, the horn spring 23 is elastically restored such that the airbag module 2 is retracted, and thereby the contact points are separated from each other such that sounding is stopped.

Therefore, the housing 15 of the airbag module 2 and the core metal 3 of the steering wheel 1 form a conductive circuit.

**In** order to reliably activate the horn, it is preferable that an embossment (not shown) be provided on the outside edge of the housing 15 as the contact point on the airbag module 2 side, and a copper rivet 25 be provided on the core metal 3 as the contact point on the steering wheel 1 side, as depicted in FIG. 2.

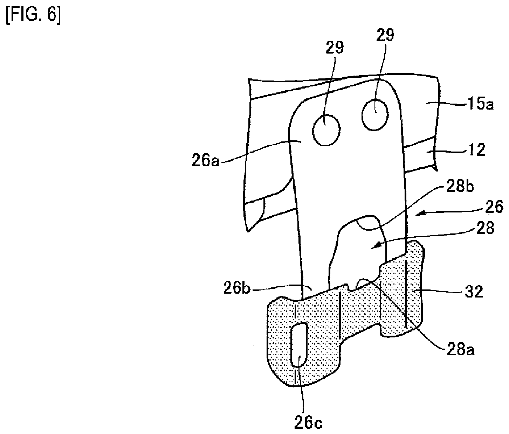

Further, in the present embodiment, as a configuration for attaching the airbag module 2 to the steering wheel 1 in the Z-axis direction, an engaging member 26 is provided on the housing 15 and an engaging protrusion 27 is provided on the core 3, as depicted in FIG. 6 to FIG. 10.

The engaging member 26 is provided between the steering wheel 1 and the airbag module 2 in parallel with the damper unit 11 described above.

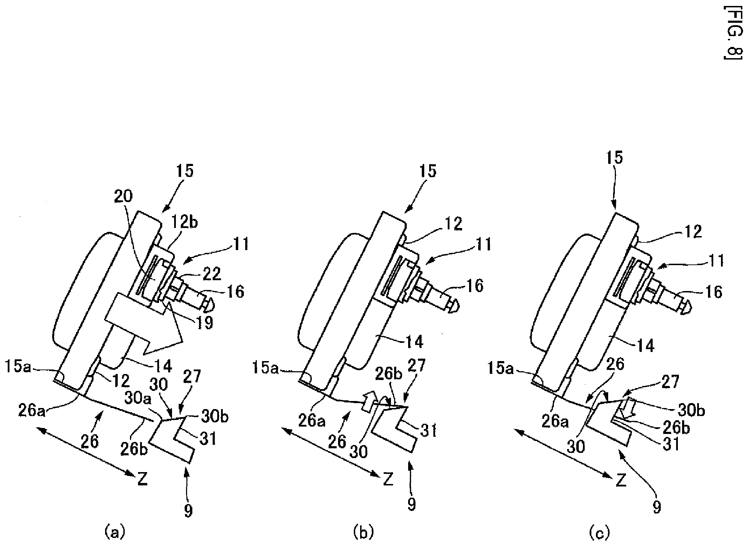

As depicted in FIG. 6 and FIG. 8, the engaging member 26 is formed of a plate material that is elastically deformable in the direction of the thickness thereof.

The engaging member 26 has a base end 26a, which is a first end in the longitudinal direction, joined to the peripheral wall 15a of the housing 15, and is thereby provided on the airbag module 2 side.

An engaging hole 28 is formed in the engaging member 26 at a tip end 26b side, which is the other end in the length direction, so as to penetrate therethrough in the plate thickness direction. In the illustrated example, the engaging hole 28 is formed in a substantially rectangular shape in the longitudinal direction of the engaging member 26.

A pair of left and right ribs 26c are provided on the tip end 26b side of the engaging member 26 and are bent toward the housing 15 side so as to sandwich the engaging hole 28 from both sides in the width direction of the engaging member 26.

As a material used for the engaging member 26, stainless steel is most preferable in terms of a balance of elasticity, strength, and cost, and of these, SUS301 CSP 3/4H t0.6 is most preferable.

The base end 26a of the engaging member 26 is joined to the peripheral wall 15a of the housing 15 by rivets 29 at two locations in the width direction of the engaging member 26 in order to ensure high rigidity against the tensile load generated between the airbag module 1 and the airbag module 2.

The engaging protrusion 27 is integrally provided on the bridge part 9 of the boss area 5 formed by the core metal 3 of the steering wheel 1 so as to protrude from the bridge part 9.

The engaging protrusion 27 is formed so as to protrude upward from a position on the lower side of the steering wheel 1 in the vertical direction, in other words, from the bridge part 9 on the 6 o'clock side which is below the boss hole 4, based on the neutral position of the steering wheel 1, toward the boss hole 4 which is the center of the steering wheel 1. As a result, the engaging protrusion 27 is positioned between the bridge part 9 and the boss hole 4.

As depicted in FIG. 2 and FIG. 7, the engaging protrusion 27 is formed by an inclined surface 30 that appears on the front side of the bridge part 9 in the Z-axis direction, with the bridge part 9 (front side) as the starting point 30a and extending diagonally upward toward the boss hole 4.

The surface of the engaging protrusion 27 that appears on the back side of the bridge part 9 is a flat engaging surface 31 that extends downward from the end edge 30bb of the inclined surface 30 to the back side of the bridge part 9. That is, the engaging protrusion 27 is formed in a substantially right-angled triangle shape when viewed from the X-axis direction.

The inclined surface 30 is formed toward the Z-axis direction, which is the mounting direction of the airbag module 2 to the steering wheel 1.

As depicted in FIG. 7 and FIG. 8, the tip end 26b of the engaging member 26 is slid on the inclined surface 30.

The width dimension of the engaging protrusion 27 in the X-axis direction is set so as to enable insertion thereof into the engaging hole 28 of the engaging member 26.

When the tip end 26b side of the engaging member 26 slides along the inclined surface 30, the rectangular engaging hole 28 has a leading edge 28a close to the tip end 26b of the engaging member 26 that moves first, and a trailing edge 28b closer to the base end 26a of the engaging member 26 that moves second.

When the airbag module 2 is attached to the steering wheel 1 in the Z-axis direction, the tip end 26b of the engaging member 26 is first positioned on the starting point 30a side of the inclined surface 30, as depicted in FIG. 8(a).

When the airbag module 2 is subsequently pressed toward the steering wheel 1, as shown in FIG. 8(b), the tip end 26b of the engaging member 26 slides along the inclined surface 30 and is displaced toward the boss hole 4, so that the engaging member 26 is elastically bent and deformed.

As depicted in FIG. 8C, when the leading edge 28a of the engaging hole 28 reaches the end edge 30b and passes over the end edge 30b of the inclined surface 30, the engaging member 26 elastically returns to its original shape, and the engaging protrusion 27 is inserted into the engaging hole 28.

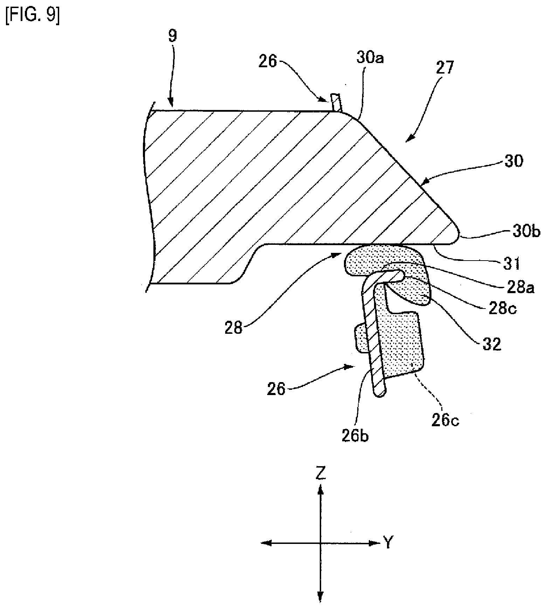

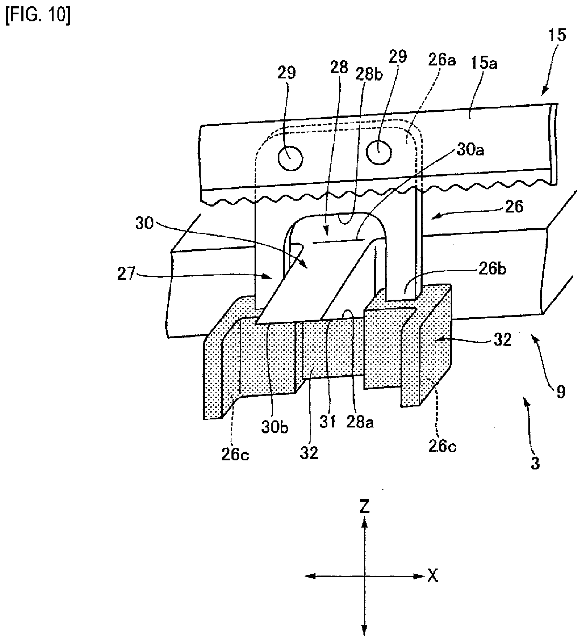

Then, as depicted in FIG. 9 and FIG. 10, the leading edge 28a of the engaging hole 28 into which the engaging protrusion 27 is inserted is engaged with the engaging surface 31 of the engaging protrusion 27.

As a result, the engaging protrusion 27 and the engaging hole 28 are engaged with each other, and the airbag module 2 is attached to the core metal 3 of the steering wheel 1.

The inclined surface 30 allows the engaging member 26 to be smoothly bent and elastically deformed.

The core metal 3 of the steering wheel 1 having the spokes 7, 8, and the like, the bridge part 9, and the boss area 5 including the engaging protrusion 27 are formed by pouring metal into a casting mold which is divided by a parting line P.

As depicted in FIG. 7, the parting line P is set to cross the inclined surface 30 so as to prevent burrs or chips from being formed on the upper and lower ends of the engaging protrusion 27.

The inclined surface 30 may be polished or otherwise treated to make the inclined surface more slippery. In this manner, even if the parting line P remains, elastic deformation of the engaging member 26 can be smooth.

This prevents the engaging member 26 from being impeded in assembling with the engaging protrusion 27 and prevents the engaging member 26 from being damaged, thereby enabling smooth assembly.

Between the engaging protrusion 27 and the engaging hole 28, an insulating member 32 is provided as a covering material to prevent contact between the engaging protrusion 27 and the engaging hole 28 engaged with the engaging protrusion 27, thereby insulating them from electrical conduction. In the present embodiment, the insulating member 32 is provided on an engaging member 26 having an engaging hole 28.

The insulating member 32 is formed out of a non-conductive material such as a synthetic resin material. The insulating member 32 is provided to match the position of the rib 26c of the engaging member 26.

As depicted in FIG. 6 and FIG. 9, the insulating member 32 covers the front and back of the engaging member 26, including the rib 26c, and is mated with a folded part 28c of the leading edge 28a of the engaging hole 28 that engages with the engaging surface 31 of the engaging protrusion 27, thereby covering the leading edge 28a.

Therefore, the trailing edge 28b side of the engaging hole 28 may or may not be covered by the insulating member 32.

FIG. 9 depicts the state in which the engaging hole 28 is engaged with the engaging protrusion 27. An insulating member 32 provided on the front edge 28a of the engaging hole 28 including the rib 26c and the folded part 28c is engaged with the engaging surface 31 of the engaging protrusion 27.

Therefore, the insulating member 32 can ensure noise reduction, wear resistance, and impact resistance at the engaging portions in all X, Y, and Z axis directions at low cost.

In the Z-axis direction, the airbag module 2 is provided on the core metal 3 of the steering wheel 1 and receives the elasticity effect of the horn spring 23.

Therefore, only the front edge 28a of the engaging hole 28 of the engaging member 26 on the airbag module 2 side is engaged with the engaging surface 31 of the engaging protrusion 27 of the core metal 3.

As a result, only the front edge 28a of the engaging hole 28 and the vicinity are insulated from the engaging protrusion 27, thereby cutting off electrical conduction between the core metal 3 and the housing 15 of the airbag module 2.

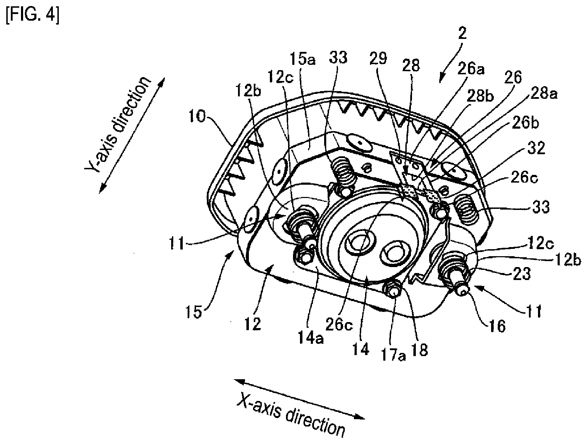

In the present embodiment, as depicted in FIG. 4, the locking plate 12 of the airbag module 2 is provided with a pair of coil springs 33 on both sides of the engaging member 26 in the X-axis direction via bushings 34 (see FIG. 5).

These coil springs 33 ensure a support structure from the core 3 side of the airbag module 2 around the engaging member 26 located on the 6 o'clock side, in other words, stable support of the airbag module 2 when the horn is not operated, and favorable press operability of the airbag module 2 when the horn is operated.

Operation of the mounting structure of the airbag module 2 to the steering wheel 1 according to the present embodiment will be described with reference to FIG. 7 to FIG. 10.

When attaching the airbag module 2 to the steering wheel 1, as depicted in FIG. 7, the pin 16 inserted into the damper unit 11 is brought into contact with the collar member 24 near the boss hole 4 of the core bar 3 in the Z-axis direction, and the tip end 26b of the engaging member 26 provided with the insulating member 32 is abutted against the starting point 30a of the inclined surface 30 of the engaging protrusion 27.

Next, as depicted in FIG. 8, the airbag module 2 is pressed in the Z-axis direction toward the core metal 3, and the engaging member 26 is caused to move along the inclined surface 30 of the engaging protrusion 27, thereby undergoing bending elastic deformation.

Finally, the engaging protrusion 27 is inserted into the engaging hole 28 by the elastic restoring action of the engaging member 26.

When the engaging protrusion 27 is inserted into the engaging hole 28, as depicted in FIG. 9, the insulating member 32 abuts against the engaging surface 31 of the engaging protrusion 27, and the core 3 and the airbag module 2 including the engaging member 26 are engaged in an electrically insulated state.

As a result, as shown in Figure 10, the engaging member 26 joined to the housing 15 of the airbag module 2 surrounds the engaging protrusion 27 with the leading edge 28a of the engaging hole 28 engaging with the engaging surface 31 of the engaging protrusion 27, and the airbag module 2 is attached to the core 3 of the steering wheel 1.

Almost simultaneously with this attachment, the damper unit 11 is coupled to the collar member 24 of the boss area 5 via the pin 16, completing the connection between the airbag module 2 and the steering wheel 1 via the damper unit 11.

In the mounting structure for mounting an airbag module to a steering wheel according to the present embodiment, the mounting is performed by inserting the engaging protrusion 27 into the engaging hole 28, that is, by the engaging action in which the engaging protrusion 27 is surrounded by the engaging hole 28.

Therefore, when attaching the airbag module 2, which transmits vibrations, to the steering wheel 1, the engaging portions between the engaging members 26 and the engaging protrusions 27 can ensure a reliable attachment without any rattling in any direction in the X, Y, and Z axial directions.

The engaging member 26 is provided with an insulating member 32 that covers the leading edge 28a and surrounding area of the engaging hole 28. This ensures electrical insulation between the engaging member 26 provided on the housing 15 and the core metal 3 on which the engaging protrusion 27 is formed, allowing the horn to operate properly.

Furthermore, by inserting the engaging protrusion 27 into the engaging hole 28 and by providing the insulating member 32 in the engaging hole 28, noise reduction, wear resistance, and impact resistance at the engaging portion can be ensured.

When the airbag module 2 is mounted to the steering wheel 1, the engaging member 26 is elastically bent and deformed by the inclined surface 30 of the engaging protrusion 27.

Therefore, the engaging protrusion 27 and the engaging hole 28 can be engaged simply by pressing the airbag module 2, making the installation operation extremely simple and providing superior assembly workability.

The structure for mounting an airbag module to a steering wheel described above is a preferred example of the present invention, but other embodiments can be implemented or performed in various ways. In particular, unless otherwise described in the specification of the application, the invention is not restricted to the shapes, sizes, configurational dispositions, and the like of the parts illustrated in detail in the accompanying drawings. In addition, the expressions and terms used in the specification of the application are used for providing a description, without limiting the invention thereto, unless specifically described otherwise.

### <Addendum 1>

The mounting structure for mounting the airbag module 2 to the steering wheel 1 includes: an engaging member 26, the base end side being joined to the housing 15 of the airbag module 2, having an engaging hole 28 at the tip end thereof; an engaging protrusion 27 formed on the core 3 of the steering wheel 1 so as to protrude upward from a vertical lower position of the steering wheel 1 toward the center of the steering wheel 1, with the neutral position of the steering wheel 1 as a reference, and which is inserted into the engaging hole 28 of the engaging member 26 to mount the airbag module 2 to the steering wheel 1; and an insulating member 32 provided between the engaging protrusion 27 and the engaging hole 28 for preventing contact between the engaging protrusion 27 and the engaging hole 28 engaged with the engaging protrusion 27.

### <Addendum 2>

In the mounting structure for mounting the airbag module 2 to the steering wheel 1 described in Addendum 1, the engaging member 26 is formed of a plate material having an engaging hole 28 formed therethrough and capable of bending elastically deforming, and the engaging protrusion 27 is formed with an inclined surface 30 along which the tip end 26b of the engaging member 26 slides along the mounting direction of the airbag module 2 mounting to the steering wheel 1, the engaging member 26 slides along the inclined surface 30 and undergoes bending elastic deformation, and when the engaging hole 28 reaches the end edge 30b of the inclined surface 30, the engaging member 26 elastically restores its original shape, and the engaging protrusion 27 may be inserted into the engaging hole 28.

### <Addendum 3>

In the mounting structure for mounting the airbag module 2 to the steering wheel 1 described in Addendum 1, the core metal 3 of the steering wheel 1 is formed by a casting mold which is molded at a parting line P, and the parting line P is set so as to cross the inclined surface 30.

### <Addendum 4>

**In** the mounting structure for mounting the airbag module 2 to the steering wheel 1 described in any one of Addendums 1 to 3, the housing 15 of the airbag module 2 and the core metal 3 of the steering wheel 1 may form a conductive circuit.

### <Addendum 5>

In the mounting structure for mounting the airbag module 2 to the steering wheel 1 described in any one of Addendums 1 to 4, the airbag module 2 is a damper mass, and a damper unit 11 for damping vibrations of the steering wheel 1 may be provided between the steering wheel 1 and the airbag module 2 in parallel with the engaging member 26.

### EXPLANATION OF CODES

1. Steering wheel
2. Airbag module
3. Core metal
11. Damper unit
15. Housing
26. Engaging member
26a. Base end of engaging member
26b. Tip end of engaging member
27. Engaging protrusion
28. Engaging hole
30. Inclined surface
30b. End edge of inclined surface
32. Insulating member
P. Parting line

## Claims

1. A mounting structure for mounting an airbag module to steering wheel comprising:
an engaging member, a base end side being joined to housing of the airbag module, having an engaging hole at the tip end thereof;
an engaging protrusion formed on a core of the steering wheel so as to protrude upward from a vertical lower position of the steering wheel toward the center of the steering wheel, with the neutral position of the steering wheel as a reference, and which is inserted into an engaging hole of the engaging member to mount the airbag module to the steering wheel; and
an insulating member provided between the engaging protrusion and the engaging hole for preventing contact between the engaging protrusion and the engaging hole engaged with the engaging protrusion.

2. The mounting structure for mounting the airbag module to the steering wheel according to claim 1, wherein
the engaging member is formed of a plate material having the engaging hole formed therethrough and capable of bending elastically deforming,
the engaging protrusion is formed with an inclined surface along which a tip end of the engaging member slides along the mounting direction of the airbag module mounting to the steering wheel,
the engaging member slides along the inclined surface and undergoes bending elastic deformation, and
when the engaging hole reaches an end edge of the inclined surface, the engaging member elastically restores the original shape thereof and the engaging protrusion is inserted into the engaging hole.

3. The mounting structure for mounting the airbag module to the steering wheel according to claim 2, wherein the core metal of the steering wheel is formed by a casting mold which is molded at a parting line, and the parting line is set so as to cross the inclined surface.

4. The mounting structure for mounting the airbag module to the steering wheel according to any one of claims 1 to 3, wherein the housing of the airbag module and the core metal of the steering wheel form a conductive circuit.

5. The mounting structure for mounting the airbag module to the steering wheel according to any one of claims 1 to 3, wherein the airbag module is a damper mass, and a damper unit for damping vibrations of the steering wheel is provided between the steering wheel and the airbag module in parallel with the engaging member.
